# EUROPEAN PATENT APPLICATION

(11) **EP 4 693 800 A1**
(43) Date of publication of application: **11.02.2026**
(21) Application number: 24223592.7
(22) Date of filing: 30.12.2024
(51) Int. Cl.: H02J 7/00, H02J 50/10, H02J 50/80

(54) **WIRELESS CHARGING METHOD AND APPARATUS, ELECTRONIC DEVICE AND STORAGE MEDUIM**

(30) Priority: 09.08.2024 CN 202411096837
(71) Applicant: Beijing Xiaomi Mobile Software Co., Ltd., Beijing 100085 (CN)
(72) Inventor: XUE, Yibo, Beijing 100085 (CN)
(74) Representative: Stöckeler, Ferdinand

(57) **Abstract**

A wireless charging method includes enabling (S201) a first boost circuit; in a case where an access of the device to be charged is detected, establishing (S202) a communication connection with the device to be charged using the wireless power supply chip; in a case where checking data sent by a device to be charged is received, performing (S203) an encryption process on the checking data using a preset encryption algorithm and generating an encryption result; returning (S204) the encryption result to the device to be charged; in a case where a checking success message sent by the device to be charged is received, disabling (S205) the first boost circuit; enabling (S206) a second boost circuit; and charging (5207) the device to be charged with a voltage provided by the second boost circuit using the wireless power supply chip.

## Description

### TECHNICAL FIELD

The present invention relates to the field of charging technologies, and in particular to a wireless charging method and apparatus, an electronic device and a storage medium.

### BACKGROUND

With the development of wireless charging technology, devices that support wireless charging can also use themselves as a power supply end to output energy to the outside, for reverse wireless charging of other devices that support wireless charging.

However, in the process, since a power supply end device and a device to be charged cannot verify each other's identity, and in order to avoid damage to the device to be charged by high-power charging, the power supply end device can only perform wireless charging on other devices to be charged by a single low-power mode.

### SUMMARY

To overcome problems in the related art, the present invention provides a wireless charging method and apparatus, an electronic device, and a storage medium.

The invention is set out in the appended set of claims.

According to a first aspect of embodiments of the present invention, there is provided a wireless charging method, applied to a power supply device, the power supply device including a battery, a wireless power supply chip, a first boost circuit and a second boost circuit; the battery being connected to the wireless power supply chip through the first boost circuit and the second boost circuit separately;
the method including:
enabling the first boost circuit, such that the battery powers the wireless power supply chip using the first boost circuit;
in a case where an access of the device to be charged is detected, establishing a communication connection with the device to be charged using the wireless power supply chip;
in a case where checking data sent by the device to be charged is received, performing an encryption process on the checking data using a preset encryption algorithm, and generating an encryption result;
returning the encryption result to the device to be charged, such that the device to be charged checks the encryption result;
in a case where a checking success message sent by the device to be charged is received, disabling the first boost circuit;
enabling a second boost circuit, such that the battery powers the wireless power supply chip using the second boost circuit; and
charging the device to be charged with a voltage provided by the second boost circuit using the wireless power supply chip.

Optionally, the communication connection between the power supply device and the device to be charged is interrupted after the first boost circuit is disabled;
after the second boost circuit is enabled, the method further includes:
establishing the communication connection with the device to be charged using the wireless power supply chip again;
receiving the checking data sent by the device to be charged, and returning a corresponding encryption result to the device to be charged again; and
charging the device to be charged with the voltage provided by the second boost circuit using the wireless power supply chip includes:
   in a case where the checking success message sent by the device to be charged is received again, charging the device to be charged with the voltage provided by the second boost circuit using the wireless power supply chip.

Optionally, performing the encryption process on the checking data using the preset encryption algorithm and generating the encryption result includes:
in a case where electricity (stored energy) of the power supply device is greater than a preset value, performing the encryption process on the checking data using the preset encryption algorithm and obtaining the encryption result.

According to a second aspect of embodiments of the present invention, there is provided a wireless charging method, applied to a device to be charged, the device to be charged including a wireless charging chip, the method including:
in a case where a power supply device is detected, establishing a communication connection with the power supply device using the wireless charging chip;
in a case where the device to be charged supports a target charging power, sending checking data to the power supply device;
receiving an encryption result for the checking data returned by the power supply device, and checking the encryption result;
in a case where the encryption result passes the checking, sending a checking success message to the power supply device; and
receiving electrical energy transmitted by the power supply device at the target charging power, such that the device to be charged is in a charging state.

Optionally, the method further includes:
before the checking of the encryption result passes, or after the device to be charged is in the charging state, powering the wireless charging chip using the electrical energy transmitted by the power supply device through a coil.

Optionally, the method further includes:
after the encryption result passes the checking, interrupting the communication connection between the power supply device and the device to be charged; and
powering the wireless charging chip using a battery of the device to be charged, such that the communication connection between the device to be charged and the power supply device is maintained.

Optionally, the method further includes:
after the encryption result passes the checking, interrupting the communication connection between the power supply device and the device to be charged; and
establishing the communication connection with the power supply device using the wireless charging chip again;
sending checking data to the power supply device, and checking the encryption result returned by the power supply device again; and
in a case where the encryption result passes the checking, sending the checking success message to the power supply device again.

Optionally, the method further includes:
in a case where the communication connection is interrupted, maintaining a charging state indicator displayed on a screen of the device to be charged unchanged.

Optionally, sending the checking data to the power supply device includes:
in a case where electricity of the device to be charged is less than a second preset value, sending checking data to the power supply device.

According to a third aspect of embodiments of the present invention, there is provided a wireless charging apparatus, applied to a power supply device, the power supply device including a battery, a wireless power supply chip, a first boost circuit and a second boost circuit; the battery being connected to the wireless power supply chip through the first boost circuit and the second boost circuit separately;
the apparatus including:
a first enabling module configured to enable the first boost circuit, such that the battery powers the wireless power supply chip using the first boost circuit;
a detection module configured to, in a case where an access of a device to be charged is detected, establish a communication connection with the device to be charged using the wireless power supply chip;
an encryption module configured to, in a case where checking data sent by the device to be charged is received, perform an encryption process on the checking data using a preset encryption algorithm, and generate an encryption result;
a returning module configured to return the encryption result to the device to be charged, such that the device to be charged checks the encryption result;
a receiving module configured to, in a case where a checking success message sent by the device to be charged is received, disable the first boost circuit;
a second enabling module configured to enable the second boost circuit, such that the battery powers the wireless power supply chip using the second boost circuit; and
a charging module configured to charge the device to be charged with a voltage provided by the second boost circuit using the wireless power supply chip.

According to a fourth aspect of embodiments of the present invention, there is provided a wireless charging apparatus, applied to a device to be charged, the device to be charged including a wireless charging chip, the apparatus including:
a detection module configured to, in a case where a power supply device is detected, establish a communication connection with the power supply device using the wireless charging chip;
a first sending module configured to, in a case where the device to be charged supports a target charging power, send checking data to the power supply device;
a receiving module configured to receive an encryption result for the checking data returned by the power supply device, and check the encryption result;
a second sending module configured to, in a case where the encryption result passes the checking, send a checking success message to the power supply device; and
a charging module configured to receive electrical energy transmitted by the power supply device at the target charging power, such that the device to be charged is in a charging state.

According to a fifth aspect of embodiments of the present invention, there is provided an electronic device, including:
a processor; and
a memory configured to store executable instructions of the processor;
in which the processor is configured to execute the executable instructions, to perform the method of the first aspect, or the method of the second aspect.

According to a sixth aspect of embodiments of the present invention, there is provided a computer-readable storage medium having a computer program stored thereon, in which when the computer program is executed by a processor, the computer program implement the method of the first aspect, or the method of the second aspect.

In the technical solution provided by embodiments of the present invention, the power supply device includes the battery, the wireless power supply chip, the first boost circuit and the second boost circuit, and the battery may power the wireless power supply chip through the first boost circuit or the second boost circuit, such that the wireless power supply chip outputs different wireless charging powers. Specifically, the power supply device may first power the wireless power supply chip through the first boost circuit. In a case where an access of the device to be charged is detected, the power supply device may establish the communication connection with the device to be charged using the wireless power supply chip. In a case where the checking data sent by the device to be charged is received, the power supply device may perform the encryption process on the checking data using the preset encryption algorithm, generate the encryption result, and return the encryption result to the device to be charged, such that the device to be charged may check the encryption result. In in a case where the checking success message sent by the device to be charged is received, the power supply device may switch a power supply circuit configured to power the wireless power supply chip to the second boost circuit, and charge the device to be charged with the voltage provided by the second boost circuit using the wireless power supply chip. Therefore, the technical solution provided by embodiments of the present invention may enable identity checking between the power supply device and the device to be charged through the checking data, and after passing the checking switch the voltage input into the wireless power supply chip, such that the power supply device may flexibly adjust the power supply voltage according to different devices to be charged, realizing wireless charging with different powers.

### BRIEF DESCRIPTION OF THE DRAWINGS

FIG. 1 illustrates a schematic diagram of a system architecture in an embodiment of the present invention.
FIG. 2 illustrates a flow diagram of a wireless charging method in an embodiment of the present invention.
FIG. 3 illustrates a schematic diagram of a data packet structure containing checking data in an embodiment of the present invention.
FIG. 4 illustrates a schematic diagram of an interaction between a power supply device and a device to be charged in an embodiment of the present invention.
FIG. 5 illustrates a flow diagram of another wireless charging method in an embodiment of the present invention.
FIG. 6 illustrates a structural schematic diagram of a wireless charging device in an embodiment of the present invention.
FIG. 7 illustrates a structural schematic diagram of another wireless charging device in an embodiment of the present invention.
FIG. 8 is a structural schematic diagram of an electronic device in an embodiment of the present invention.

### DETAILED DESCRIPTION

Exemplary embodiments will be illustrated in detail herein, and the examples thereof are shown in the accompanying drawings. When the following description refers to the accompanying drawings, unless otherwise specified, the same or similar elements are denoted by the same numerals in the different accompanying drawings. Implementations described in the exemplary embodiments do not represent all implementations consistent with the present invention. On the contrary, they are merely examples of a device and a method consistent with some aspects of the present invention, as elaborated in the appended claims.

Embodiments of the present invention provide a wireless charging method applied to a wireless reverse charging scenario. The identify checking between a power supply device and a device to be charged may be performed by transferring checking data, and after passing the checking, the voltage input into the wireless power supply chip may be switched, such that the power supply device may flexibly adjust the power supply voltage according to different devices to be charged, realizing wireless charging with different powers.

It could be understood that, the power supply device and the device to be charged in embodiments of the present invention may be any electronic devices with wireless charging function, such as smart phones, tablet computers, etc., but the above examples should not be construed as limitation of the present invention.

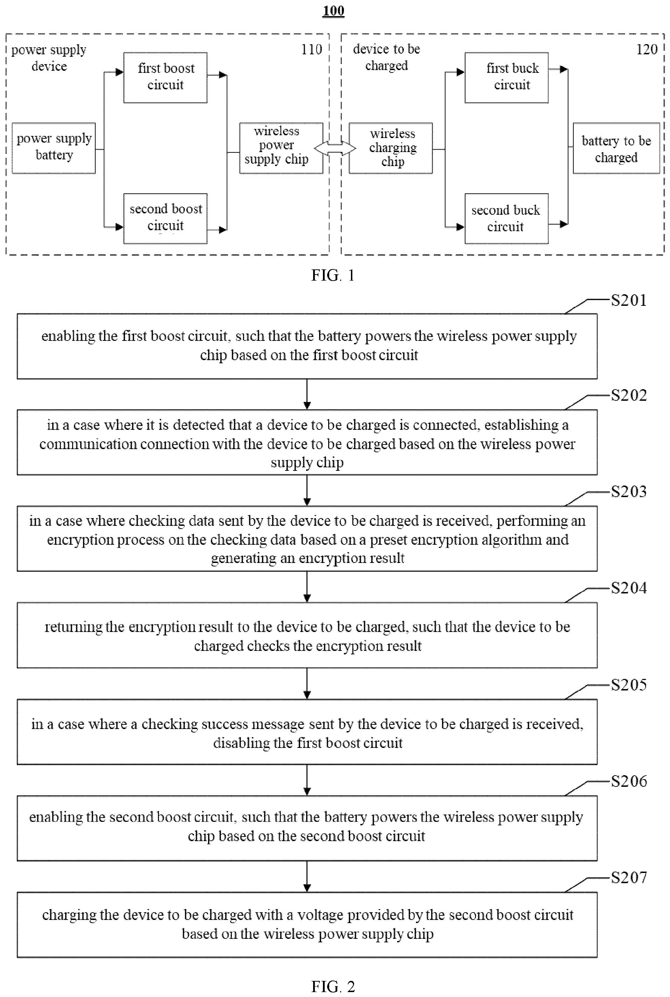

By way of example, FIG. 1 illustrates a schematic diagram of an illustrative system architecture that can employ a wireless charging method of embodiments of the present invention.

As illustrated in FIG. 1, the system architecture 100 includes a power supply device 110 and a device to be charged 120. The power supply device 110 includes a power supply battery, a first boost circuit, a second boost circuit and a wireless power supply chip; and the device to be charged 120 includes a battery to be charged, a first buck circuit, a second buck circuit and a wireless charging chip.

For example, the power supply battery is connected to the wireless power supply chip through the first boost circuit and the second boost circuit separately, and the wireless charging chip is connected to the battery to be charged through the first buck circuit and the second buck circuit separately.

It could be understood that, in the wireless reverse charging scenario, the power supply device 110 and the device to be charged 120 are electronic devices with wireless charging capability, and they have similar charging architecture. That is to say, the first boost circuit and the first buck circuit may be essentially the same type of circuit, and depending on different current input directions in the circuit, either a boost or a buck capability may be realized. For example, when applied to the power supply device 110, the circuit may receive the voltage output from the power supply battery and boost it into the wireless power supply chip in order to increase the charging power; while when applied to the device to be charged 120, the circuit may receive the voltage input from the wireless charging chip and reduce it to the voltage demanded by the battery to be charged and then input it to the battery to be charged.

Similarly, the second boost circuit and the second buck circuit may be essentially the same type of circuit, and similarly depending on different current input directions in the circuit, either a boost or a buck capability may be realized, which is not repeatedly described in the embodiments of the present invention.

In the same principle, the wireless power supply chip and the wireless charging chip can be the same type of chip. The chip may be used as a wireless power supply chip in the power supply device 110 in order to output energy externally. The chip may also be used as a wireless charging chip in the device to be charged 120 in order to receive external input energy and convert it into current.

By way of example, the first boost circuit and the first buck circuit may be a power management integrated circuit (PMIC), and the second boost circuit and the second buck circuit may be a charge pump chip.

The present example implementation will be described in detail below in conjunction with the accompanying drawings and embodiments.

First, embodiments of the present invention provide a wireless charging method, which may be performed by any device supporting wireless charging function. By way of example, the device may be used as a power supply device in a wireless reverse charging scenario when performing the method provided by embodiments of the present invention.

FIG. 2 illustrates a flow diagram of a wireless charging method in an embodiment of the present invention. As illustrated in FIG. 2, the wireless charging method provided by embodiments of the present invention includes steps S201 to S206 below.

In S201, the first boost circuit is enabled, such that the battery powers the wireless power supply chip using the first boost circuit.

By way of example, the power supply device may cause the first boost circuit to be in an enabled state, and cause the second boost circuit to be in a disabled state, such that the voltage output from the battery of the power supply device can be boosted by the first boost circuit and power the wireless power supply chip.

In some embodiments, the voltage of the battery output through the first boost circuit may be less than the voltage output through the second boost circuit. In other words, at the beginning of a wireless charging process, the battery will power the wireless power supply chip at a relatively small voltage, such that the wireless power supply chip can output a relatively small amount of energy to the outside through a coil, avoiding damage to the device to be charged not compatible with high-power wireless charging.

In S202, in a case where an access of the device to be charged is detected, a communication connection with the device to be charged is established using the wireless power supply chip.

In some embodiments, the communication connection between the power supply device and the device to be charged may be established based on a wireless charging protocol such as BPP (Baseline Power Profile) or EPP (Extended Power Profile).

By way of example, the wireless power supply chip when energized can send a fixed-frequency signal outwardly to detect whether the device to be charged is accessing. After an access of the device to be charged is detected, the wireless power supply chip may send a signal with sufficient energy outwardly to activate the communication function of the wireless charging chip in the device to be charged, thereby enabling the power supply device to establish a communication connection with the device to be charged.

In some embodiments, after the communication connection between the power supply device and the device to be charged is established, the device to be charged may send a charging parameter, such as the desired charging power, to the power supply device, to cause the power supply device to output a corresponding charging power through the wireless power supply chip. Since the communication connection between the power supply device and the device to be charged may be established based on a wireless charging protocol such as BPP or EPP, a charging power requested here should be no greater than an upper limit of charging power specified in the protocol. That is to say, the power supply device can at this point charge the device to be charged using a relatively small charging power specified in the protocol.

In S203, in a case where checking data sent by the device to be charged is received, an encryption process is performed on the checking data using a preset encryption algorithm, and an encryption result is generated.

In some embodiments, the checking data may be any random number generated by the device to be charged. The power supply device may perform the encryption process on the random number with a preset encryption algorithm (in the power supply device), and generate the encryption result. The encryption algorithm herein may be a symmetric encryption algorithm or an asymmetric encryption algorithm, which is not limited by embodiments of the present invention.

In some embodiments, the device to be charged may send the checking data to the power supply device through amplitude shift keying (ASK) modulation mode. Specifically, the device to be charged may change the amount of the energy delivered by changing a resonant parameter of the wireless charging chip (by switching in/out a communication capacitor), thereby causing a regular fluctuation in the voltage or current of the power supply device, which is used to transfer the checking data.

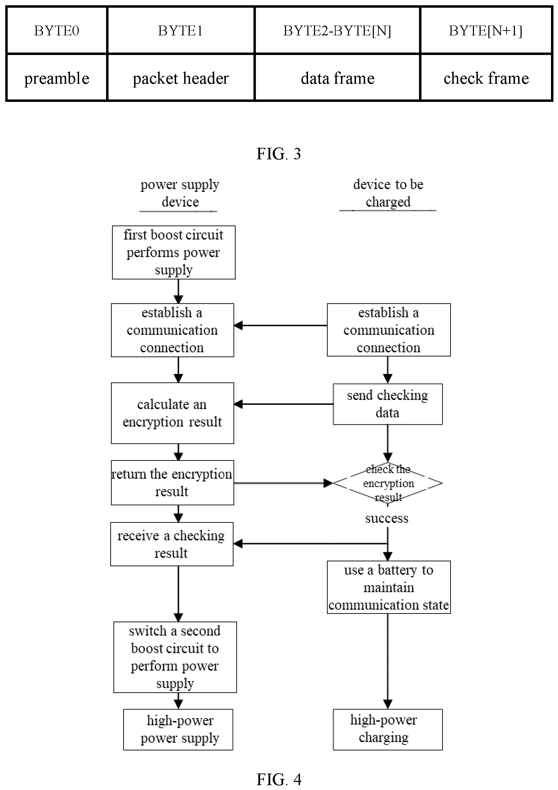

FIG. 3 is a schematic diagram of a data packet structure containing checking data. As illustrated in FIG. 3, the data packet includes a preamble, a packet header, a data frame, and a checking frame. The preamble is a set of all 1's pulses, and serves to enable the power supply device to accurately detect a starting bit of the packet header. The packet header contains a byte, which can consist of a combination of 0s and 1s, and is used to tell the power supply device the type of data packet. The data frame can contain 1 to 27 bytes, consisting of a combination of 0s and 1s, and is used to store the checking data. The checking frame contains a byte, and is used to be provided to the power supply device such that the power supply device can determine whether a received checking data is correct.

In some embodiments, the checking data may be sent by the device to be charged to the power supply device in a case where electricity of the device to be charged is less than a second preset value. Since both the power supply device and the device to be charged will enter the high-power charging mode after the checking data passes the verification, and in the wireless reverse charging scenario, the high-power charging will cause the power supply device's own electricity to drop rapidly. Therefore, timing of a start of the high-power charging mode can be controlled by limiting the timing of the sending of the checking data, thereby avoiding unnecessary and rapid consumption of the electricity of the power supply device.

In some embodiments, the power supply device may, in a case where its electricity is greater than a first preset value, perform an encryption process on the checking data using the preset encryption algorithm, and obtain the encryption result. That is to say, the power supply device can calculate the encryption result when it has a large amount of remaining electricity, to complete the checking with the device to be charged, in order to ensure that the power supply device will not rapidly exhaust its own electricity due to the wireless reverse charging.

In S204, the encryption result is returned to the device to be charged, such that the device to be charged checks the encryption result.

In some embodiments, the power supply device may send the encryption result to the device to be charged by frequency shift keying (FSK) modulation mode. Specifically, the power supply device may change the fluctuation of the energy received by the device to be charged by reciprocally increasing/decreasing a driving frequency of the wireless power supply chip. When this fluctuation fluctuates according to a specific pattern, it can be used to transfer the encryption result.

By way of example, since a structure of the data packet containing the encryption result is similar to the structure of the data packet illustrated in FIG. 3, the difference is that the data frame is used to store the encryption result. Therefore, with respect to the structure of the data packet containing the encryption result, reference may be made to the structure of the data packet illustrated in FIG. 3, and embodiments of the present invention will not elaborate on this.

In S205, in a case where a checking success message sent by the device to be charged is received, the first boost circuit is disabled.

In some embodiments, after receiving the encryption result returned by the power supply device, the device to be charged may check the encryption result and send a checking success message/checking failure message to the power supply device to inform the power supply device of a checking result.

By way of example, the checking of the encryption result by the device to be charged may be as follows: a decryption process may be performed on the encryption result using a preset decryption algorithm in the device to be charged, and if a result obtained after decryption is consistent with the checking data sent to the power supply device, the checking is successful; otherwise, the checking is failed.

By way of example, the checking of the encryption result by the device to be charged may also be as follows: the checking data sent to the power supply device is encrypted using a preset encryption algorithm in the device to be charged, and if an obtained encryption result is consistent with the encryption result returned by the power supply device, the checking is successful; otherwise, the checking is failed.

In some embodiments, when the power supply device receives a checking success message from the device to be charged, it may be determined that both the power supply device and the device to be charged support high-power charging at a target charging power. Since a boost ratio of the second boost circuit is larger than that of the first boost circuit, i.e., powering the wireless charging chip through the second boost circuit enables the power supply device to output electrical energy of the target charging power.

Therefore, when the power supply device receives a checking success message from the device to be charged, it is necessary to switch a circuit powering the wireless power supply chip to the second boost circuit. Furthermore, in order to avoid the two boost circuits being enabled at the same time, resulting in the output power being too high and causing damage to the device, it is necessary to disable the first boost circuit before the second boost circuit is enabled.

In S206, the second boost circuit is enabled, such that the battery powers the wireless power supply chip using the second boost circuit.

In some embodiments, after the first boost circuit is disabled, the power supply device may cause the second boost circuit to be in an enabled state, such that the voltage output from the battery in the power supply device can be boosted through the second boost circuit and power the wireless power supply chip.

By way of example, the voltage output from the battery through the second boost circuit may be greater than the voltage output through the first boost circuit. Therefore, switching the power supply circuit configured to power the wireless power supply chip to the second boost circuit can increase the energy output to the outside by the wireless power supply chip through the coil, thereby increasing the wireless charging power.

In S207, the device to be charged is charged with the voltage provided by the second boost circuit using the wireless power supply chip.

Thus, the device to be charged and the power supply device have mutually confirmed that they can support a high-power wireless charging mode, and the power supply device can perform a high-power wireless reverse charging on the device to be charged with the voltage provided by the second boost circuit using the wireless power supply chip.

The technical solution provided by embodiments of the present invention may enable identity checking between the power supply device and the device to be charged through the checking data, and after passing the checking switch the voltage input into the wireless power supply chip, such that the power supply device may flexibly adjust the power supply voltage according to different devices to be charged, realizing wireless charging with different powers.

The overall concept of the wireless charging method provided by embodiments of the present invention is described above in conjunction with FIGS. 2 and 3.

It is worth noting that when the power supply device switches the power supply circuit of the wireless power supply chip, it is necessary to disable the first boost circuit before enabling the second boost circuit.

In a case where the wireless power supply chip is energized, the wireless charging chip is powered by the energy transmitted by the wireless power supply chip through the coil. Therefore, after the first boost circuit is disabled and before the second boost circuit is enabled, the wireless power supply chip in the power supply device will be briefly de-energized and will not be able to transmit energy to the outside through the coil, at this time the wireless charging chip of the device to be charged will also be de-energized, and the communication connection between the power supply device and the device to be charged will be interrupted.

In some embodiments, in order to avoid the need to re-establish a communication connection between the wireless power supply chip and the wireless charging chip after the power supply is restored, the wireless charging chip of the device to be charged may be powered by the battery of the device to be charged itself during the switching of the power supply circuit of the wireless power supply chip by the power supply device, to maintain the communication connection between the device to be charged and the power supply device. Therefore, the device to be charged can directly receive wireless charging energy of a target charging power sent by the wireless power supply chip of the power supply device with the voltage provided by the second boost circuit after the power supply device performs the switching of the power supply circuit.

In some embodiments, it is also possible to re-establish a communication connection between the wireless power supply chip and the wireless charging chip after power supply is restored, and then the high-power wireless charging is performed. Specifically, after the power supply device switches the power supply circuit for powering the wireless power supply chip to the second boost circuit, the power supply chip may establish a communication connection with the device to be charged using the wireless power supply chip again. Subsequently, the checking data sent by the device to be charged is received again and a corresponding encryption result is returned to the device to be charged. Furthermore, in a case where the checking success message sent by the device to be charged is received again, the device to be charged is charged with the voltage provided by the second boost circuit using the wireless power supply chip (at this time, no de-energizing occurs because switching of the power supply circuit is no longer involved). In addition, in this mode, as the de-energizing of the wireless charging chip will be reflected to a charging state displayed on a screen of the device to be charged, i.e., the screen briefly displays that the device to be charged exits the charging state. In order to avoid disturbing the user (e.g., misinterpreted by the user as a poor contact), it is possible to maintain the charging state indicator displayed on the screen of the device to be charged unchanged in a case of an interruption of the communication connection (during switching of the power supply circuit), i.e., to always display that the device to be charged is in the charging state.

FIG. 4 illustrates a schematic diagram of an interaction between a power supply device and a device to be charged in an embodiment of the present invention. As illustrated in FIG. 4, the power supply device may first power its own wireless power supply chip using the first boost circuit. In in a case where an access of the device to be charged is detected, the power supply device may establish the communication connection with the device to be charged.

Then, the device to be charged may send the checking data to the power supply device. After receiving the checking data, the power supply device may perform the encryption process on the checking data using the encryption algorithm pre-stored in the power supply device, and obtain the encryption result.

Next, the power supply device can return the encryption result to the device to be charged. After receiving the encryption result returned by the power supply device, the device to be charged may check the encryption result.

By way of example, in a case where the checking is successful, the device to be charged may power its own wireless charging chip using its own battery, to maintain the communication state. After the charging device successfully checks the encryption result, it can also send the checking success message to the power supply device. The power supply device, in case of receiving the checking success message, may disable the first boost circuit after a short delay (for ensuring that the wireless charging chip is switched to be powered by the battery), and subsequently enable the second boost circuit, to perform high-power charging on the device to be charged with the voltage provided by the second boost circuit.

By way of example, in a case where the checking is successful, the device to be charged may also not maintain its own communication state using the battery. In other words, after the power supply device receives the checking success message and switches to powering its own wireless power supply chip by the second boost circuit, the communication connection between the power supply device and the device to be charged may be re-established based on the above manner and the checking may be performed. When the power supply device receives the checking success message again, the power supply device is no longer involved in the switching of the power supply circuit, and at this time, can perform high-power charging on the device to be charged directly with the voltage provided by the second boost circuit.

Based on the same inventive concept, embodiments of the present invention also provide another wireless charging method, which can be performed by any device that supports wireless charging function. By way of example, the device may serve as a device to be charged in a wireless reverse charging scenario when performing the method provided by embodiments of the present invention.

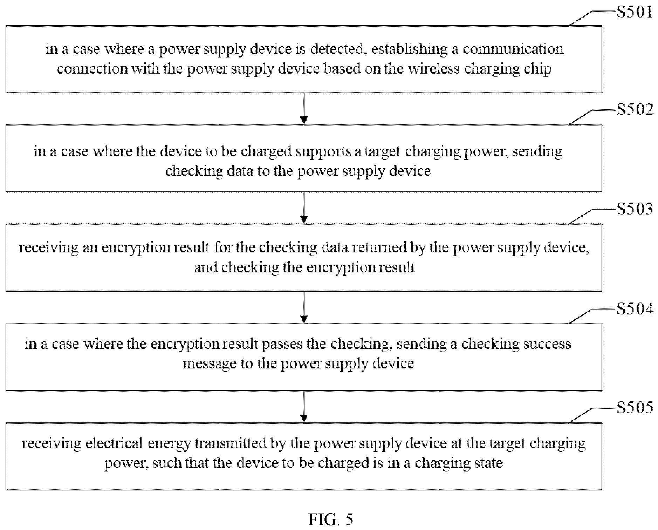

FIG. 5 illustrates a flow diagram of a wireless charging method in an embodiment of the present invention. As illustrated in FIG. 5, the wireless charging method provided in an embodiment of the present invention includes steps S501 to S505 below.

In S501, in a case where a power supply device is detected, a communication connection with the power supply device is established using the wireless charging chip.

The power supply device includes a battery, a wireless power supply chip, a first boost circuit, and a second boost circuit, and the battery is connected to the wireless power supply chip through the first boost circuit and the second boost circuit separately.

By way of example, a charging power provided by the second boost circuit is greater than a charging power provided by the first boost circuit. Therefore, in order to avoid damage to a device that do not support high-power charging, the wireless power supply chip is powered in an initial state through the first boost circuit to establish a communication connection with the device to be charged.

In S502, in a case where the device to be charged supports a target charging power, checking data is sent to the power supply device.

By way of example, the target charging power may be a charging power provided by the power supply device through the second boost circuit. In a case where the device to be charged supports the target charging power, the checking data may be actively sent to the power supply device, to enable the power supply device to recognize the charging power that the device to be charged can support.

In S503, an encryption result for the checking data returned by the power supply device is received, and the encryption result is checked.

In a case where the power supply device supports output of the target charging power, the power supply device may encrypt the checking data using a preset encryption algorithm and return the generated encryption result to the device to be charged.

In S504, in a case where the encryption result passes the checking, a checking success message may be sent to the power supply device.

In some embodiments, after the device to be charged sends the checking success message to the power supply device, it means that handshake between the device to be charged and the power supply device is completed, and the power supply device will charge the device to be charged through the target charging power output from the second boost circuit.

In S505, the electrical energy transmitted by the power supply device at the target charging power is received, such that the device to be charged is in a charging state.

In some embodiments, the power supply device needs to switch the circuit for powering the wireless power supply chip from the first boost circuit to the second boost circuit in order to output electrical energy of the target charging power after receiving the checking success message. At this point, the power supply device needs to first disable the first boost circuit and subsequently enable the second boost circuit, and this process will cause the wireless power supply chip in the power supply device to briefly power down.

By way of example, before the encryption result passes the checking, or after the device to be charged is in the charging state, the device to be charged is using the electrical energy transmitted by the power supplying device through the coil to power the wireless charging chip. The power down of the wireless power supply chip after the encryption result passes the checking will prevent the power supply device from transmitting electrical energy through the coil, thus powering down the wireless charging chip, which ultimately leads to the interruption of the communication between the power supply device and the device to be charged.

In view of this, the device to be charged may power the wireless charging chip using the battery of the device to be charged after the encryption result passes the checking, to maintain the communication connection between the device to be charged and the power supply device. Accordingly, the power supply device may, when receiving the checking success message, disable the first boost circuit after a short delay, thereby ensuring that the device to be charged may utilize the battery of the device to be charged itself to power the wireless charging chip before the first boost circuit is disabled (i.e., before the power down of the wireless power supply chip occurs).

In some embodiments, the communication connection between the power supply device and the device to be charged may be re-established after the communication connection between the power supply device and the device to be charged is interrupted. By way of example, the device to be charged may establish a communication connection with the power supply device using the wireless charging chip again. Subsequently, the checking data is sent again to the power supply device and the encryption result returned by the power supply device is checked. In a case where the encryption result passes the checking, a checking success message is again sent to the power supply device to request the wireless power supply chip to transmit energy through the coil with the voltage provided by the second boost circuit.

Since re-establishing the communication connection no longer involves switching of the power supply circuit on the side of the power supply device, it does not result in interruption of the communication connection. The power supply device may charge the device to be charged by directly outputting energy of the target charging power through the second boost circuit.

In some embodiments, in a case where the communication connection is interrupted, the charging state indicator displayed on the screen of the device to be charged remains unchanged.

In some embodiments, S502 may include: in a case where the electricity of the device to be charged is less than a second preset value, sending the checking data to the power supply device.

Since the principle of the present wireless charging method embodiment for solving a problem is similar to that of the method embodiment illustrated in FIG. 2 above, the implementation of the present wireless charging method embodiment can refer to the implementation of the method embodiment illustrated in FIG. 2 above, and the repetition will not be repeated.

Based on the same inventive concept, embodiments of the present invention further provide a wireless charging apparatus, such as the following embodiment. Since the principle of the wireless charging apparatus embodiment for solving a problem is similar to that of the method embodiment illustrated in FIG. 2 above, the implementation of the wireless charging apparatus embodiment can refer to the implementation of the method embodiment illustrated in FIG. 2 above, and the explanation will not be repeated.

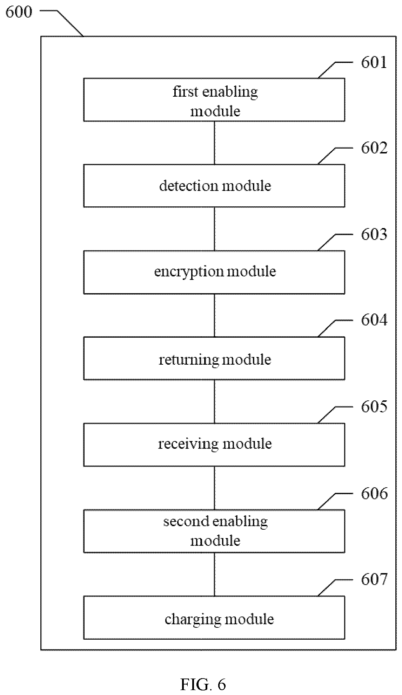

FIG. 6 illustrates a structural schematic diagram of a wireless charging apparatus in an embodiment of the present invention. The wireless charging apparatus may be applied to the power supply device. The power supply device includes a battery, a wireless power supply chip, a first boost circuit and a second boost circuit; and the battery is connected to the wireless power supply chip through the first boost circuit and the second boost circuit separately.

Specifically, as illustrated in FIG. 6, the wireless charging apparatus 600 includes: a first enabling module 601, a detection module 602, an encryption module 603, a returning module 604, a receiving module 605, a second enabling module 606, and a charging module 607.

The first enabling module 601 is configured to enable the first boost circuit, such that the battery powers the wireless power supply chip using the first boost circuit.

The detection module 602 is configured to, in a case where an access of the device to be charged is detected, establish a communication connection with the device to be charged using the wireless power supply chip.

The encryption module 603 is configured to, in a case where checking data sent by the device to be charged is received, perform an encryption process on the checking data using a preset encryption algorithm, and generate an encryption result.

The returning module 604 is configured to return the encryption result to the device to be charged, such that the device to be charged checks the encryption result.

The receiving module 605 is configured to, in a case where a checking success message sent by the device to be charged is received, disable the first boost circuit.

The second enabling module 606 is configured to enable the second boost circuit, such that the battery powers the wireless power supply chip using the second boost circuit.

The charging module 607 is configured to charge the device to be charged with a voltage provided by the second boost circuit using the wireless power supply chip.

In some embodiments, the communication connection between the power supply device and the device to be charged is interrupted after the first boost circuit is disabled. The wireless charging apparatus 600 further includes a communication module (not illustrated) configured to establish a communication connection with the device to be charged using the wireless power supply chip again; receive checking data sent by the device to be charged, and return a corresponding encryption result to the device to be charged again.

The charging module 607 is specifically configured to, in a case where a checking success message sent by the device to be charged is received again, charge the device to be charged with the voltage provided by the second boost circuit using the wireless power supply chip.

In some embodiments, the encryption module 603 is specifically configured to, in a case where the electricity of the power supply device is greater than a preset value, perform an encryption process on the checking data using a preset encryption algorithm, and obtain an encryption result.

Based on the same inventive concept, embodiments of the present invention further provide another wireless charging apparatus, such as the following embodiment. Since the principle of the wireless charging apparatus embodiment for solving a problem is similar to that of the method embodiment illustrated in FIG. 5 above, the implementation of the wireless charging apparatus embodiment can refer to the implementation of the method embodiment illustrated in FIG. 5 above, and the repetition will not be repeated.

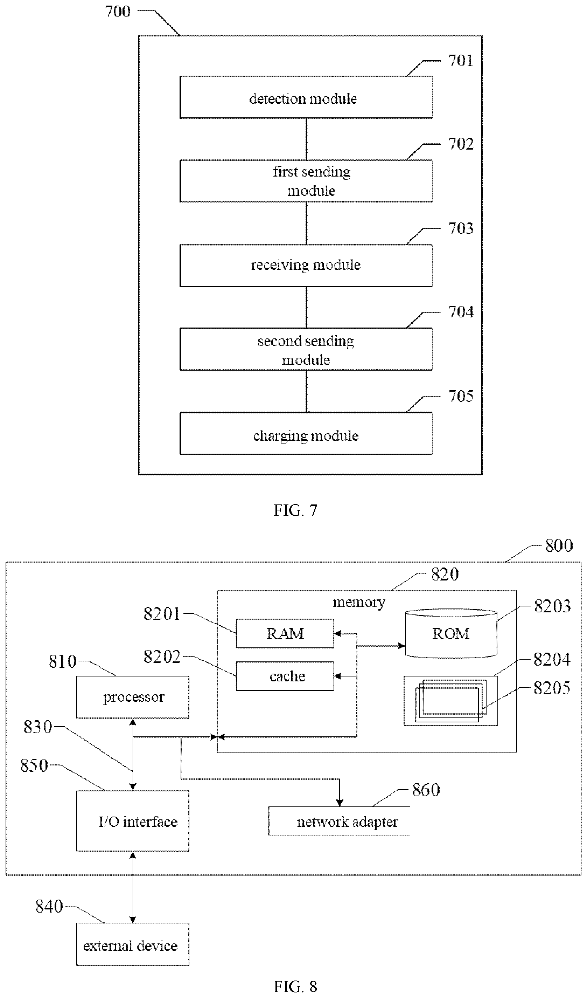

FIG. 7 illustrates a structural schematic diagram of a wireless charging apparatus in an embodiment of the present invention. The wireless charging apparatus may be applied to a device to be charged, and the device to be charged includes a wireless charging chip.

Specifically, as illustrated in FIG. 7, the wireless charging apparatus 700 includes a detection module 701, a first sending module 702, a receiving module 703, a second sending module 704, and a charging module 705.

The detection module 701 is configured to, in a case where a power supply device is detected, establish a communication connection with the power supply device using the wireless charging chip.

The first sending module 702 is configured to, in a case where the device to be charged supports a target charging power, send checking data to the power supply device.

The receiving module 703 is configured to receive an encryption result for the checking data returned by the power supply device, and check the encryption result.

The second sending module 704 is configured to, in a case where the encryption result passes the checking, send a checking success message to the power supply device.

The charging module 705 is configured to receive electrical energy transmitted by the power supply device at the target charging power, such that the device to be charged is in a charging state.

In some embodiments, the wireless charging apparatus 700 further includes a power supply module (not illustrated) configured to before the encryption result passes the checking or after the device to be charged is in the charging state, power the wireless charging chip using the electrical energy transmitted by the power supply device through the coil.

In some embodiments, the power supply module is further configured to, after the encryption result passes the checking, interrupt the communication connection between the power supply device and the device to be charged. The wireless charging chip is powered using the battery of the device to be charged, to maintain a communication connection between the device to be charged and the power supply device.

In some embodiments, the wireless charging apparatus 700 further includes a communication module (not illustrated) configured to after the encryption result passes the checking, interrupt the communication connection between the power supply device and the device to be charged; establish the communication connection with the power supply device using the wireless charging chip again; send the checking data to the power supply device and check the encryption result returned by the power supply device again; and in a case where the encryption result passes the checking, send a checking success message to the power supply device again.

In some embodiments, the wireless charging apparatus 700 further includes a display module (not illustrated) configured to, in a case where the communication connection is interrupted, maintain a charging state indicator displayed on a screen of the device to be charged unchanged.

In some embodiments, the first sending module 702 is specifically configured to, in a case where the electricity of the device to be charged is less than a second preset value, send the checking data to the power supply device.

An electronic device 800 capable of realizing embodiments of the present invention is described below with reference to FIG. 8. The electronic device 800 illustrated in FIG. 8 is only an example, no limitations should be brought to the functions and scope of application of embodiments of the present invention.

As illustrated in FIG. 8, the electronic device 800 is represented in the form of a general-purpose computing device. Components of the electronic device 800 may include, but are not limited to: at least one processor 810, at least one memory 820, a bus 830 connecting different system components (including the memory 820 and the processor 810).

The memory stores program codes that can be executed by the processor 810 to cause the processor 810 to perform the steps described in the "illustrative methods" section above of the present invention according to various illustrative embodiments of the present invention.

In some embodiments, the processor 810 may perform the following steps of method embodiments described above:
enabling first boost circuit, such that the battery powers the wireless power supply chip using the first boost circuit;
in a case where it is detected that the device to be charged is connected, establishing a communication connection with the device to be charged using the wireless power supply chip;
in a case where checking data sent by the device to be charged is received, performing an encryption process on the checking data using a preset encryption algorithm, and generating an encryption result;
returning the encryption result to the device to be charged, such that the device to be charged checks the encryption result;
in a case where a checking success message sent by the device to be charged is received, disabling the first boost circuit;
enabling the second boost circuit, such that the battery powers the wireless power supply chip using the second boost circuit; and
charging the device to be charged with a voltage provided by the second boost circuit using the wireless power supply chip.

In some embodiments, the processor 810 may further perform the following steps of method embodiments described above.
in a case where a power supply device is detected, establishing a communication connection with the power supply device using the wireless charging chip;
in a case where the device to be charged supports a target charging power, sending checking data to the power supply device;
receiving an encryption result for the checking data returned by the power supply device, and checking the encryption result;
in a case where the encryption result passes the checking, sending a checking success message to the power supply device; and
receiving electrical energy transmitted by the power supply device at the target charging power, such that the device to be charged is in the charging state.

The memory 820 may include a readable medium in a form of volatile memory, such as random-access memory (RAM) 8201 and/or cache memory 8202, and may further include read-only memory (ROM) 8203.

The memory 820 may also include a program/utility 8204 having a set (at least one) of program modules 8205 such that the program modules 8205 include, but are not limited to: an operating system, one or more applications, other program modules, and program data, and each of these examples, or some combination thereof, may include an implementation of a network environment.

The bus 830 may represent one or more of several types of bus structures, including a memory bus or memory controller, a peripheral bus, a graphics acceleration port, a processor, or a local area bus that uses any of the plurality of bus structures.

The electronic device 800 may also be in communication with one or more external devices 840 (e.g., keyboards, pointing devices, Bluetooth devices, etc.), and may also be in communication with one or more devices that enable a user to interact with the electronic device 800, and/or in communication with any device (e.g., a router, modem, etc.) that enables the electronic device 800 to communicate with one or more other computing devices. This communication can be done through the Input / Output (I/O) Interface 850. Furthermore, the electronic device 800 may also communicate with one or more networks (e.g., a local area network (LAN), a wide area network (WAN), and/or a public network, such as the Internet) through a network adapter 860. As illustrated in FIG. 8, the network adapter 860 communicates with other modules of the electronic device 800 through the bus 830. It should be appreciated that, although not illustrated in the drawings, other hardware and/or software modules may be used in conjunction with the electronic device 800, including, but not limited to: microcode, device drivers, redundant processors, external disk drive arrays, RAID systems, tape drives, and data backup storage systems, among others.

By the above description of embodiments, it is readily understood by those skilled in the art that example embodiments described herein may be realized by software or by software in combination with the necessary hardware. Therefore, a technical solution according to embodiments of the present invention may be embodied in the form of a software product that may be stored on a non-volatile storage medium (which may be a CD-ROM, a USB flash drive, a removable hard disk, etc.) or on a network, and that includes a number of instructions for causing a computing device (which may be a personal computer, a server, a terminal device, or a network device, etc.) to perform a method according to embodiments of the present invention.

In illustrative embodiments of the present invention, there is also provided a computer-readable storage medium, the computer-readable storage medium may be a readable signal medium or a readable storage medium. A program product capable of implementing the above-described methods of the present invention is stored thereon. In some possible implementations, aspects of the present invention may also be implemented in the form of a program product including program codes that, when the program product is run on a terminal device, are used to cause the terminal device to perform the steps described in the above-described "illustrative methods" section of the present invention according to various illustrative embodiments of the present invention.

The specification and embodiments are to be regarded as illustrative only, with the scope of the present invention being indicated by the appended claims.

## Claims

1. A wireless charging method, performed by a power supply device, the power supply device comprising a battery, a wireless power supply chip, a first boost circuit and a second boost circuit, the battery being connected to the wireless power supply chip through the first boost circuit and the second boost circuit separately;
the method comprising:
enabling (S201) the first boost circuit, such that the battery powers the wireless power supply chip using the first boost circuit;
in a case where an access of the device to be charged is detected, establishing (S202) a communication connection with the device to be charged using the wireless power supply chip;
in a case where checking data sent by the device to be charged is received, performing (S203) an encryption process on the checking data using a preset encryption algorithm and generating an encryption result;
returning (S204) the encryption result to the device to be charged, such that the device to be charged checks the encryption result;
in a case where a checking success message sent by the device to be charged is received, disabling (S205) the first boost circuit;
enabling (S206) the second boost circuit, such that the battery powers the wireless power supply chip using the second boost circuit; and
charging (S207) the device to be charged with a voltage provided by the second boost circuit using the wireless power supply chip.

2. The method according to claim 1, wherein the communication connection between the power supply device and the device to be charged is interrupted after the first boost circuit is disabled;
after enabling (S206) the second boost circuit, the method further comprises:
establishing a communication connection with the device to be charged using the wireless power supply chip again;
receiving checking data sent by the device to be charged, and returning a corresponding encryption result to the device to be charged again; and
charging the device to be charged with the voltage provided by the second boost circuit using the wireless power supply chip comprises:
in a case where the checking success message sent by the device to be charged is received again, charging the device to be charged with the voltage provided by the second boost circuit using the wireless power supply chip.

3. The method according to claim 1 or 2, wherein performing (S203) the encryption process on the checking data using the preset encryption algorithm and generating the encryption result comprises:
in a case where an electricity of the power supply device is greater than a preset value, performing the encryption process on the checking data using the preset encryption algorithm and obtaining the encryption result.

4. The method according to any one of claims 1 to 3, wherein a voltage of the battery output through the first boost circuit is less than a voltage of the battery output through the second boost circuit.

5. The method according to any one of claims 1 to 4, wherein the checking of the encryption result by the device to be charged is that: a decryption process is performed on the encryption result using a preset decryption algorithm in the device to be charged, and if a result obtained after the decryption is consistent with the checking data sent to the power supply device, the checking is successful; otherwise, the checking has failed.

6. The method according to any one of claims 1 to 4, wherein the checking of the encryption result by the device to be charged is that: the checking data sent to the power supply device is encrypted using a preset encryption algorithm in the device to be charged, and if an obtained encryption result is consistent with the encryption result returned by the power supply device, the checking is successful; otherwise, checking has failed.

7. A wireless charging method, performed by a device to be charged, the device to be charged comprising a wireless charging chip, the method comprising:
in a case where a power supply device is detected, establishing (S501) a communication connection with the power supply device using the wireless charging chip;
in a case where the device to be charged supports a target charging power, sending (S502) checking data to the power supply device;
receiving (S503) an encryption result for the checking data returned by the power supply device, and checking the encryption result;
in a case where the encryption result passes the checking, sending (S504) a checking success message to the power supply device; and
receiving (S505) electrical energy transmitted by the power supply device at the target charging power, such that the device to be charged is in a charging state.

8. The method according to claim 7, further comprising:
before the encryption result passes the checking or after the device to be charged is in the charging state, powering the wireless charging chip using the electrical energy transmitted by the power supply device through a coil.

9. The method according to claim 7 or 8, further comprising:
after the encryption result passes the checking, interrupting the communication connection between the power supply device and the device to be charged; and
powering the wireless charging chip using a battery of the device to be charged, such that the communication connection between the device to be charged and the power supply device is maintained.

10. The method according to claim 7, further comprising:
after the encryption result passes the checking, interrupting the communication connection between the power supply device and the device to be charged; and
establishing the communication connection with the power supply device using the wireless charging chip again;
sending the checking data to the power supply device, and checking the encryption result returned by the power supply device again; and
in a case where the encryption result passes the checking, sending the checking success message to the power supply device again.

11. The method according to claim 10, further comprising:
in a case where the communication connection is interrupted, maintaining a charging state indicator displayed on a screen of the device to be charged unchanged.

12. The method according to any one of claims 4 to 8, wherein sending (S502) the checking data to the power supply device comprises:
in a case where electricity of the device to be charged is less than a second preset value, sending checking data to the power supply device.

13. A wireless charging apparatus (600), applied to a power supply device, the power supply device comprising a battery, a wireless power supply chip, a first boost circuit and a second boost circuit; the battery being connected to the wireless power supply chip through the first boost circuit and the second boost circuit separately;
the apparatus (600) comprising:
a first enabling module (601) configured to enable the first boost circuit, such that the battery powers the wireless power supply chip using the first boost circuit;
a detection module (602) configured to, in a case where an access of a device to be charged is detected, establish a communication connection with the device to be charged using the wireless power supply chip;
an encryption module (603) configured to, in a case where checking data sent by the device to be charged is received, perform an encryption process on the checking data using a preset encryption algorithm and generate an encryption result;
a returning module (604) configured to return the encryption result to the device to be charged, such that the device to be charged checks the encryption result;
a receiving module (605) configured to, in a case where a checking success message sent by the device to be charged is received, disable the first boost circuit;
a second enabling module (606) configured to enable the second boost circuit, such that the battery powers the wireless power supply chip using the second boost circuit; and
a charging module (607) configured to charge the device to be charged with a voltage provided by the second boost circuit using the wireless power supply chip.

14. A wireless charging apparatus (700), applied to a device to be charged, the device to be charged comprising a wireless charging chip, the apparatus comprising:
a detection module (701) configured to, in a case where a power supply device is detected, establish a communication connection with the power supply device using the wireless charging chip;
a first sending module (702) configured to, in a case where the device to be charged supports a target charging power, send checking data to the power supply device;
a receiving module (703) configured to receive an encryption result for the checking data returned by the power supply device, and check the encryption result;
a second sending module (704) configured to, in a case where the encryption result passes the checking, send a checking success message to the power supply device; and
a charging module (705) configured to receive electrical energy transmitted by the power supply device at the target charging power, such that the device to be charged is in a charging state.

15. A non-transitory computer-readable storage medium having a computer program stored thereon, wherein when the computer program is executed by a processor, the computer program implements a method according to any one of claims 1 to 6, or a method according to any one of claims 7 to 12.
